# EUROPEAN PATENT APPLICATION

(11) **EP 4 760 489 A1**
(43) Date of publication of application: **17.06.2026**
(21) Application number: 23948503.0
(22) Date of filing: 09.08.2023
(51) Int. Cl.: G06F 8/65

(54) **VEHICLE SYSTEM**

(71) Applicant: Astemo, Ltd., Chiyoda-ku, Tokyo 1000004 (JP)
(72) Inventor: NOKAIDO, Takaaki, Hitachinaka-shi, Ibaraki 312-8503 (JP); SAKAMOTO, Hideyuki, Hitachinaka-shi, Ibaraki 312-8503 (JP); IKEDA, Yasuhiro, Hitachinaka-shi, Ibaraki 312-8503 (JP); SOBUE, Tsuneo, Hitachinaka-shi, Ibaraki 312-8503 (JP)
(74) Representative: MERH-IP Matias Erny Reichl Hoffmann Patentanwälte PartG mbB
(86) International application number: PCT/JP2023/029199
(87) International publication number: WO 2025/032786

(57) **Abstract**

The present invention includes: a path control unit (102) that performs switching or routing control of data or signals; an update control unit (101) that is connected to the path control unit via a first update path (111) and that distributes update data including a program or program setting information of the path control unit; an update processing unit (103) that is connected to the path control unit via a second update path (112) and that, on the basis of the update data, performs update processing of the path control unit; and a storage region (104) where the program or the program setting information is held through the update processing, wherein the update control unit is connected to the update processing unit via a recovery path (113) which is different from the first update path.

## Description

### Technical Field

The present invention relates to a vehicle system capable of updating a program.

### Background Art

As one example of a vehicle-system program update method, there is an online update function that downloads a program wirelessly distributed from a program distribution center via a network and updates a program for an electronic control unit (ECU).

In a conventional program update, a user brings a vehicle to the dealer and the mechanic connects the dedicated device to the vehicle and operates the same to perform the update, but the update can be performed without visiting the dealer by using an online update function. It is easy for the user to apply a new program with a function added, a function improved, and with issues corrected, and thus this process affords the advantageous effect of improving convenience and saving time.

In addition to a program of an arithmetic processing device such as a micro-controller unit (MCU) or a system on a chip (SoC) of an ECU, possible targets for a vehicle system online update also include programs for a signal-path control device such as an Ethernet switch or a PCIe switch.

PTL 1 discloses a system that detects an abnormality of an ECU after an online update fails and performs roll-back for recovery to an old program.

### Citation List

### Patent Literature

PTL 1: JP 2022-120055 A

### Summary of Invention

### Technical Problem

In a case where an online update of a program of an arithmetic processing device fails, the program is generally recovered, through roll-back, using the old program before the update. However, in a case where an online update of a program of a path control device fails, there is a possibility of the path for performing the roll-back becoming unusable and recovery using the old program not being possible. In PTL 1, it is not assumed that a path for performing the roll-back becomes unavailable when an update of the path control device fails, and in this case, it is not possible to perform recovery to the old program.

In addition, there is technology for performing roll-back by means of determination performed by the ECU itself in a case where the program cannot be activated after an online update. However, in a case where a program updated online starts but does not operate as intended, it is not possible to determine whether or not to perform the roll-back, and thus it is not possible to perform recovery to the old program.

An object of the present invention is to provide a vehicle system capable of roll-back even in a case where an updated program of a path control unit does not perform an intended operation.

### Solution to Problem

The present application includes a plurality of means for solving the above problem, and examples thereof include a vehicle system that includes: a path control unit that performs switching or routing control of data or signals; an update control unit that is connected to the path control unit via a first update path and that distributes update data including a program or program setting information of the path control unit; an update processing unit that is connected to the path control unit via a second update path and that, on the basis of the update data, performs update processing of the path control unit; and a storage region where the program or the program setting information is held through the update processing, wherein the update control unit is connected to the update processing unit via a recovery path which is different from the first update path.

### Advantageous Effects of Invention

In the present invention, even in a case where an updated program of the path control unit does not operate as intended, it is possible to perform recovery to the old program, and hence the availability of the vehicle system is improved. In addition, repair/part replacement by the dealer in a case where recovery is not possible is suppressed.

### Brief Description of Drawings

[FIG. 1] FIG. 1 is a configuration diagram of a vehicle system according to a first embodiment of the present invention.
[FIG. 2] FIG. 2 is an operation explanatory diagram of update/recovery processing of a path control unit 102 according to the first embodiment of the present invention.
[FIG. 3] FIG. 3 is a configuration diagram of a vehicle system according to a second embodiment of the present invention.
[FIG. 4] FIG. 4 is an operation explanatory diagram of update/recovery processing of a path control unit 102 according to the second embodiment of the present invention.
[FIG. 5] FIG. 5 illustrates an example of a flowchart of diagnosis processing by an update processing unit 103 (processor) in the diagnosis steps (steps 212 to 214 illustrated in FIG. 2) of the first embodiment.

### Description of Embodiments

Hereinafter, embodiments of the present invention will be described with reference to the drawings.

### <Embodiment 1>

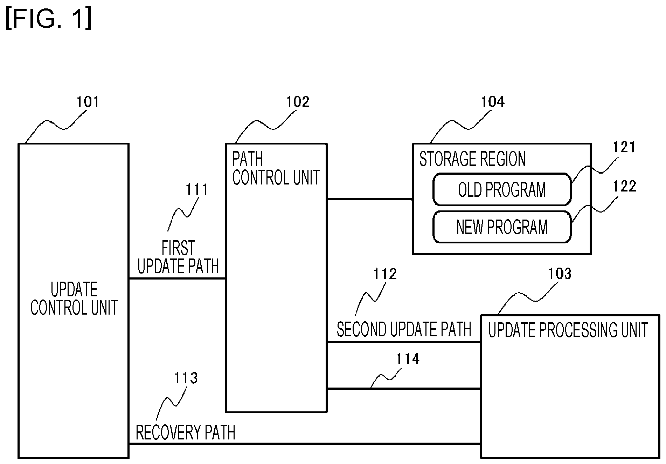

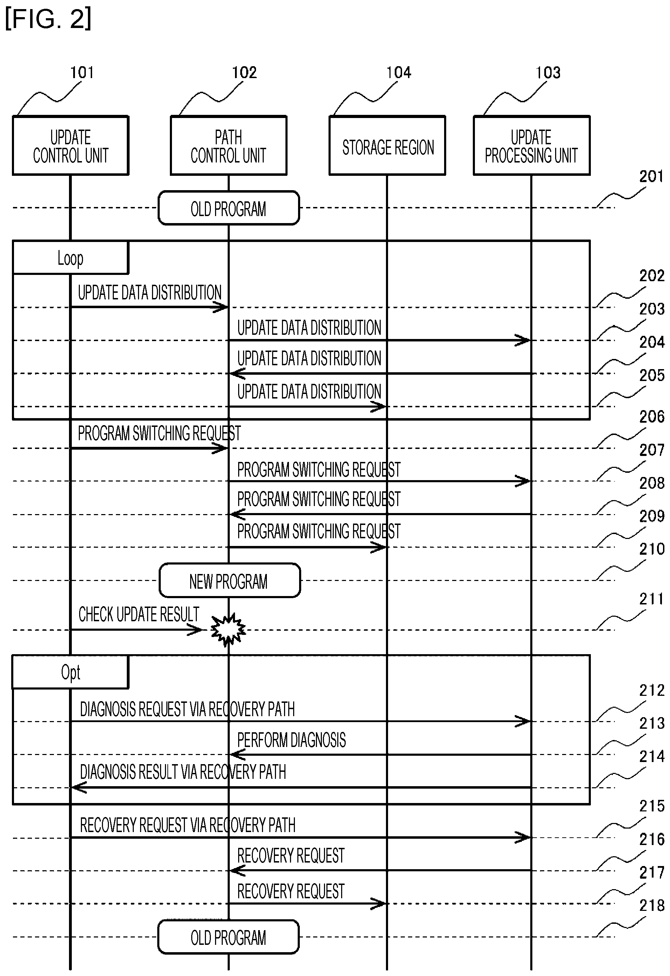

A first embodiment of a vehicle system of the present invention will be described with reference to FIGS. 1 and 2.

FIG. 1 is a configuration diagram of a vehicle system according to the first embodiment of the present invention. The vehicle system includes an update control unit 101, a path control unit 102, an update processing unit 103, a storage region 104, a first update path 111, a second update path 112, and a recovery path 113.

The path control unit 102 is a communication control device that performs switching or routing control of data or a signal. The path control unit 102 can include, for example, any one of an Ethernet switch, a PCIe switch, a MIPI A-PHY, and a CXI, or a combination of at least two thereof. The path control unit 102 can be mounted in an ECU or a CAN gateway.

The update control unit 101 is, for example, at least one processor, and is connected to the path control unit 102 via the first update path 111. The update control unit 101 controls the updates of the path control unit 102, and transmits (distributes/outputs) instructions related to the updating of the path control unit 102 (for example, update data including a program or program-setting information of the path control unit 102 which is wirelessly distributed (distributed online) from a distribution center, a program switching request for instructing switching to a new program in the storage region 104, a diagnosis request for instructing a state diagnosis of the vehicle system, and a recovery request for instructing recovery (roll-back) using an old program or old program setting information before the update).

The update processing unit 103 is, for example, an SoC including at least one processor, and is connected to the path control unit 102 via the second update path 112. Further, the update processing unit 103 is connected to the update control unit 101 via the recovery path 113 which is different from the first update path 111. The update processing unit 103 executes processing (for example, the update processing and recovery processing of the path control unit 102, and vehicle-system diagnosis steps) based on data or requests (control signals/instructions) transmitted from the update control unit 101.

The first update path 111 and the second update path 112 are communication lines of a communication scheme (communication standard) that can be controlled by the path control unit 102. In the first update path 111 and the second update path 112, the same communication scheme may be adopted, or different communication schemes may be adopted. In a specific example of the same communication scheme, both the communication schemes of the first update path 111 and the second update path 112 are Ethernet. In a specific example of different communication schemes, the first update path 111 is Ethernet, and the second update path 112 is PCIe.

The recovery path 113 may be a communication line of the same communication scheme as the first update path 111 or the second update path 112, or may be a communication line of a communication scheme which is different from these communication schemes. The communication schemes of the first update path 111, the second update path 112, and the recovery path 113 may be different from each other. However, because the first update path 111 and the second update path 112 are distribution paths for update data, it is preferable to use Ethernet, PCIe, or the like, which are capable of high-speed communication. On the other hand, because the recovery path 113 is a communication path of a control signal of the recovery processing (roll-back), a low-speed CAN or the like may be used.

The storage region 104 is a storage region secured in a storage device such as semiconductor memory, and stores the programs and program setting information of the path control unit 102. The storage region 104 can store, for example, both the old program 121 of the path control unit 102 and setting information therefor and a new program 122 of the path control unit 102 and setting information therefor. Note that, in the configuration of the first embodiment, the path control unit 102 and the storage region 104 are directly connected.

FIG. 2 is an operation explanatory diagram of the update/recovery processing of the path control unit 102 according to the first embodiment of the present invention, and a detailed operation thereof will be described with reference to FIG. 1.

In FIG. 2, reference signs 201 to 210 denote steps for executing a program update of the path control unit 102.

In step 201, the path control unit 102 operates using the old program 121 stored in the storage region 104 and is in a state before the start of the update.

In step 202, the update control unit 101 distributes the update data, which includes the program or the program setting information of the path control unit 102 distributed online, to the path control unit 102 via the first update path 111. The update data preferably includes an update request from the path control unit 102 to the update processing unit 103.

In step 203, the path control unit 102 transfers the update data received from the update control unit 101 to the update processing unit 103 via the second update path 112.

In steps 204 to 205, the update processing unit 103 that has received the update data transfers the received update data to the storage region 104 via the path control unit 102, and writes the new program 122 or setting information thereof to the storage region 104.

Note that, because the update data has a division size depending on the communication scheme of the first update path 111, steps 202 to 205 are repeatedly performed until transmission of all the update data is completed.

In step 206, the update control unit 101 transmits a program switching request to the path control unit 102 via the first update path 111.

In step 207, the path control unit 102 transfers the received program switching request to the update processing unit 103 via the second update path 112.

In steps 208 to 209, the update processing unit 103 transfers the received program switching request to the storage region 104 via the path control unit 102, and switches the program of the path control unit 102 from the old program 121 to the new program 122. As an example of switching, information for designating the startup program of the path control unit 102 (startup program designation information) is held in the storage region 104, and the new program 122 is designated as the startup program in the information. There is a method in which the path control unit 102 is subsequently restarted and, at the time of restarting, the path control unit 102 selects the startup program on the basis of the startup program designation information.

As described above, in step 210, the path control unit 102 is activated by the new program 122, and the update processing of the path control unit 102 is completed.

In FIG. 2, reference signs 211 to 218 denote steps for executing the recovery processing (roll-back) of the path control unit 102.

Step 211 shows a case where the program of the path control unit 102 is switched to the new program 122, but there is an abnormality in communication via the first update path 111 between the update control unit 101 and the path control unit 102. Examples of abnormalities include a state in which the path control unit 102 does not respond to a communication from the update control unit 101, a state in which an abnormality or a busy response from the path control unit 102 continues, and the like.

At this time, in steps 212 to 214, the update control unit 101 performs a diagnosis step for diagnosing the state of the vehicle system via the recovery path 113.

In step 212, the update control unit 101 transmits the diagnosis request to the update processing unit 103 via the recovery path 113.

In step 213, upon receiving the diagnosis request, the update processing unit 103 diagnoses the state of the vehicle system. As the diagnosis by the update processing unit 103 in the diagnosis steps, for example, at least one of normality diagnosis of the path control unit 102 or detection of an abnormality of the power supply voltage, temperature, a peripheral circuit, or the storage region 104 can be performed.

Note that, as far as the normality diagnosis of the path control unit 102 is concerned, when the first update path 111 and the second update path 112 have the same communication scheme, if the first update path 111 is abnormal, it is conceivable that the second update path 112 is also abnormal. If the second update path 112 is abnormal, there is no diagnostic path and abnormality detection cannot be performed. Therefore, the internal state of the path control unit 102 may be checked using a diagnostic path (for example, the path 114 in FIG. 1) which is different from the second update path 112.

In step 214, the update processing unit 103 notifies (transmits) the update control unit 101 of the diagnosis result via the recovery path 113. At this time, the update control unit 101 determines whether or not it is necessary to perform the roll-back of the path control unit 102 on the basis of the received diagnosis result, and transmits a recovery request in step 215 (described below) to perform the recovery processing (roll-back) if it is determined that it is necessary to perform the roll-back.

Note that the diagnosis steps 212 to 214 are not necessarily performed, and in a case where an abnormality in the communication via the first update path 111 is confirmed in step 211, the processing of steps 212 to 214 may be omitted, and the processing of step 215 and subsequent steps may be started.

In step 215, the update control unit 101 transmits a recovery request for returning the program of the path control unit 102 or setting information thereof to the old program 121 or setting information thereof, to the update processing unit 103 via the recovery path 113.

In steps 216 to 217, the update processing unit 103 transfers the received recovery request to the storage region 104 via the path control unit 102, and performs the roll-back by returning the program of the path control unit 102 or setting information thereof to the old program 121 or setting information thereof. As the old program 121 to be rolled back, a program or program setting information of the path control unit 102 operating before the update may be used, or a recovery program or program setting information stored in advance in the storage region 104 may be used.

As described above, in step 218, the path control unit 102 is activated by the old program 121, and the recovery processing (roll-back) is completed.

As described above, in the present embodiment, the update control unit 101 and the update processing unit 103 are connected via the recovery path 113 which is different from the first update path 111. When the update control unit 101 and the update processing unit 103 are connected in this manner, even if the communication between the update control unit 101 and the path control unit 102 via the first update path 111 becomes impossible due to the update of the program of the path control unit 102 or the setting information thereof, the roll-back of the path control unit 102 can be realized by transmitting the recovery request from the update control unit 101 to the update processing unit 103 via the recovery path 113. That is, in a case where the updated program of the path control unit 102 does not perform an intended operation, the use of the vehicle system can be resumed by quickly recovering the program of the path control unit 102 by using the old program. This feature improves the availability of the vehicle system. In addition, it is possible to avoid repair or part replacement by the dealer in a case where recovery has become impossible.

Note that the path control unit 102 and the update processing unit 103 are preferably also connected to each other by a path (path 114) which is different from the second update path 112. With this configuration, Even in a case where there is an abnormality in the second update path 112, the update processing unit 103 can access the path control unit 102. Therefore, for example, the update processing unit 103 can confirm the internal state of the path control unit 102 in the diagnosis step, and the update processing unit 103 can perform the recovery processing.

In addition, the old program for performing the recovery processing of the path control unit 102 is preferably either the program (old program) operating before the update in the storage region 104 or the program (recovery program) stored and prepared in advance in the storage region 104 for recovery.

The path control unit 102 can include a combination of at least two of an Ethernet switch, a PCIe switch, a MIPI A-PHY, and a CXI. For example, a broadband device (for example, a sensor) can be connected to an Ethernet switch via multi-gigabit Ethernet, and sensor information can be processed by a plurality of SoCs by connecting SoCs other than the update processing unit 103 to a PCIe switch, but each device (broadband device, plurality of SoCs) can be connected to the system by combining both an Ethernet switch and a PCIe switch.

### <Second Embodiment>

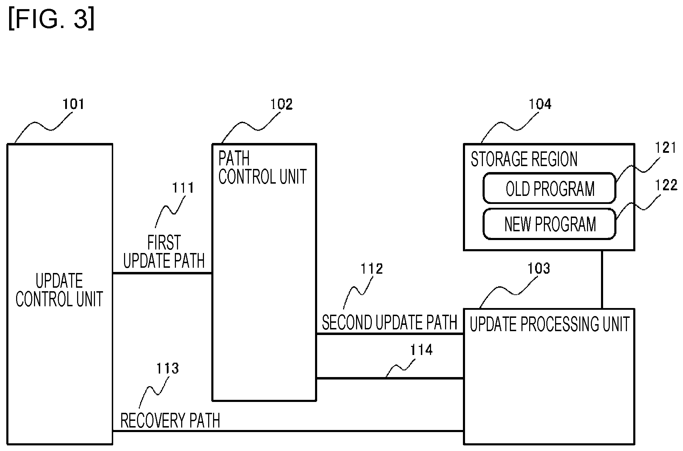

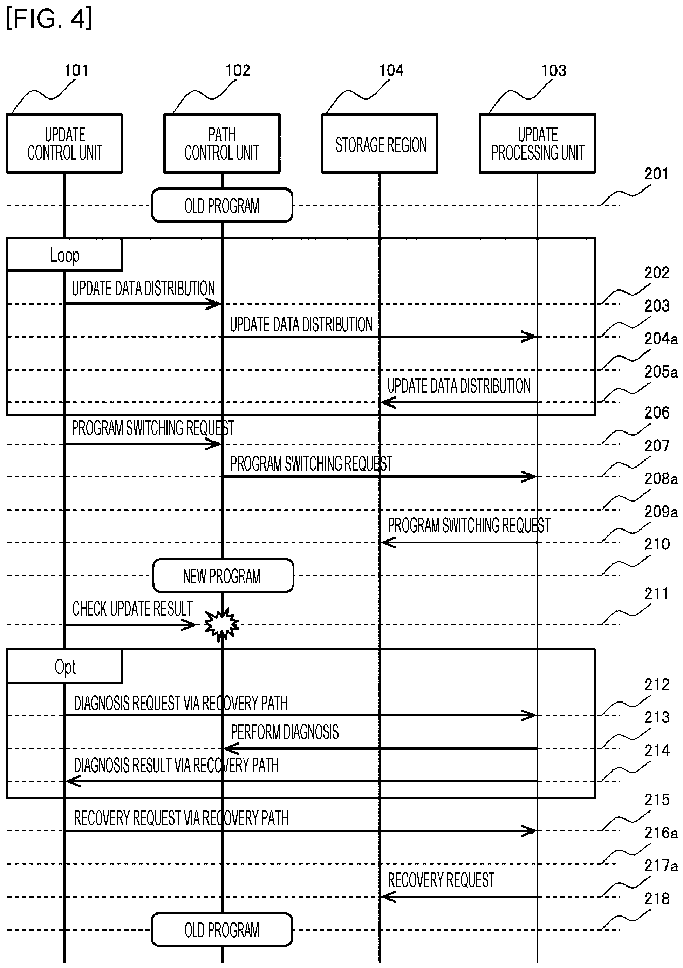

A second embodiment of the present invention will now be described with reference to FIGS. 3 and 4.

FIG. 3 is a configuration diagram of a vehicle system according to a second embodiment of the present invention, the difference from the first embodiment illustrated in FIG. 1 being the connection configuration of the storage region 104. In the second embodiment, the storage region 104 is connected to the update processing unit 103, and the old program 121 and the new program 122 of the path control unit 102 are held in the storage region 104 of the update processing unit 103. For example, in a case where the update processing unit 103 includes an SoC, the storage region 104 may be secured in the memory thereof.

FIG. 4 is an operation explanatory diagram of update/recovery processing of the path control unit 102 according to the second embodiment of the present invention. The detailed operation will be described mainly in terms of differences from the first embodiment, with reference to FIG. 3.

In steps 204a to 205a of writing the update data to the storage region 104, the update processing unit 103 transfers the received update data to the storage region 104 without passing through the path control unit 102, and writes the new program 122.

In steps 208a to 209a for switching to the new program 122, the update processing unit 103 transfers the received program switching request to the storage region 104 without passing through the path control unit 102, and switches to the new program 122. As an example of switching, information for designating the startup program of the path control unit 102 is held in the storage region 104, and the new program 122 is designated as the information. Thereafter, the update processing unit 103 is restarted, and when the update processing unit 103 transfers the new program 122 to the path control unit 102 at the time of restarting, the path control unit 102 is activated by the new program 122.

In steps 216a to 217a for roll-back to the old program 121, the update processing unit 103 transfers the received recovery request to the storage region 104 without passing through the path control unit 102, and switches to the old program 121 for roll-back.

Even if the storage region 104 is connected to the update processing unit 103 in this manner, the same advantageous effects as those of the first embodiment can be afforded.

### <Third Embodiment>

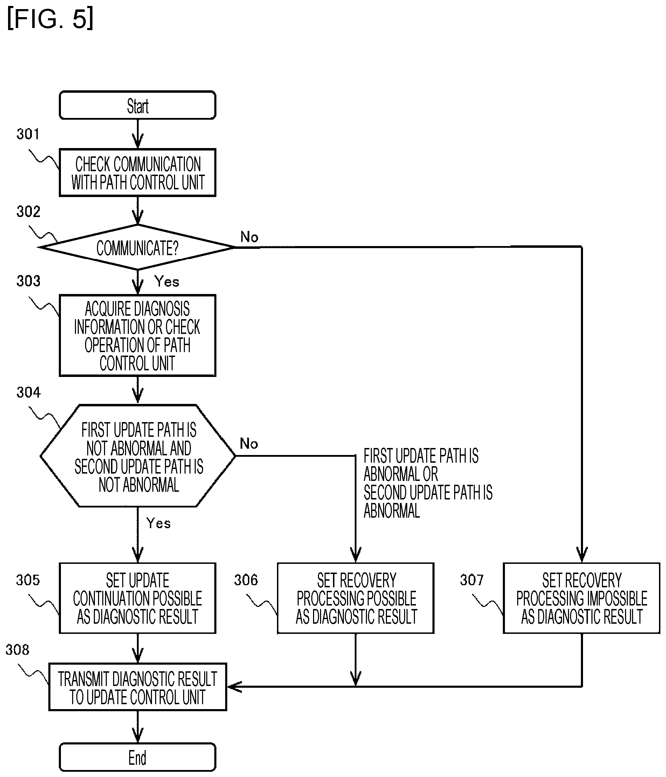

A third embodiment of the present invention will be described with reference to FIG. 5. This embodiment is one possible specific example of the diagnosis step in the first embodiment. FIG. 5 illustrates an example of a flowchart of diagnosis processing by the update processing unit 103 (processor) in the diagnosis step (steps 212 to 214 illustrated in FIG. 2) of the first embodiment.

In step 212 of FIG. 2, when the update processing unit 103 receives the diagnosis request via the recovery path 113, the flowchart of FIG. 5 is started. First, the update processing unit 103 (processor) performs processing (step 301) to check communication with the path control unit 102, and checks the result in step 302, that is, whether communication with the path control unit 102 is possible.

If the update processing unit 103 determines in step 302 that communication with the path control unit 102 is not possible, the update processing unit sets "recovery processing impossible" as the diagnosis result (step 307). At this time, because there is no means to access the storage region 104 via the path control unit 102 and switching to the old program 121 cannot be performed, the update processing unit 103 treats the recovery processing as impossible.

On the other hand, if the update processing unit 103 determines in step 302 that communication with the path control unit 102 is possible, the update processing unit 103 performs processing to acquire diagnosis information of the path control unit 102 or perform operation confirmation (step 303).

In step 303, the update processing unit 103 may acquire diagnosis information implemented by the path control unit 102 starting up after switching to the new program 122, or may issue an operation confirmation request to the path control unit 102 and acquire the result thereof.

In step 304, the update processing unit 103 checks whether or not it is determined in the processing of step 303 that there is no abnormality in the first update path 111 and there is no abnormality in the second update path 112. In a case where it is determined that there is no abnormality in the first update path 111 and there is no abnormality in the second update path 112, the update processing unit 103 performs processing to set "update continuation possible" as the diagnosis result (step 305). In this case, the update control unit 101 detects communication failure, but the update processing unit 103 determines that there is no failure. Because the communication abnormality detected by the update processing unit 103 is considered to be temporary, the update can be continued.

On the other hand, in step 304, in a case where the update processing unit 103 determines that there is an abnormality in the first update path 111 or there is an abnormality in the second update path 112, the update processing unit 103 performs processing to set "recovery processing possible" as the diagnosis result (step 306). At this time, because there is an abnormality in the operation of the path control unit 102 and the storage region 104 is accessible via the path control unit 102, the recovery processing is enabled.

The update processing unit 103 transmits the diagnosis result set in steps 305 to 307 to the update control unit 101 (step 308). The update control unit 101 may determine the next operation from the diagnosis result. For example, measures taken include: if the diagnosis result is "update continuation possible" (step 305), the processing starts again from step 210 in FIG. 2; if the diagnosis result is "recovery processing possible" (step 306), step 215 in FIG. 2 is performed; if the diagnosis result is "recovery processing impossible" (step 307), the processing ends without performing the step in FIG. 2. Note that, in a case where it is diagnosed in step 306 that there is an abnormality in the second update path 112, the update processing unit 103 communicates with the path control unit 102 via the path (third update path) 114 in step 216.

It should be noted that, although FIG. 5 has been described as the processing of the diagnosis steps of the first embodiment, the processing of FIG. 5 may be performed as the diagnosis steps of the second embodiment.

As described above, according to the present embodiment, in a case where it is determined that there is an abnormality in the first update path 111 or the second update path 112, the path control unit 102 can perform roll-back.

Note that, in each of the above embodiments, the diagnosis steps (steps 212 to 214) can be omitted, and the recovery request of step 215 may be promptly transmitted when the abnormality of the first update path 111 is detected in step 211.

Note that the present invention is not limited to or by the above embodiments, and includes various modifications without departing from the gist of the present invention. In addition, the present invention is not limited to or by embodiments which include all the configurations described in the above embodiments, and includes embodiments in which parts of the configurations are eliminated. Further, part of a configuration according to an embodiment can be added to or replaced with a configuration according to another embodiment.

In addition, each configuration related to the update control unit 101 and the update processing unit 103 described above, the functions and execution processing of each configuration, and the like, may be partially or entirely realized by hardware (for example, logic for executing each function is designed by an integrated circuit, or the like). In addition, the configurations related to the update control unit 101 and the update processing unit 103 described above may be programs (software) in which functions related to the configurations of the update control unit 101 and the update processing unit 103 are realized by being read and executed by an arithmetic processing device (for example, a CPU). The information related to programs can be stored in, for example, a semiconductor memory (flash memory, SSD, and the like), a magnetic storage device (hard disk drive or the like), a recording medium (magnetic disk, optical disk, and the like), and so forth.

In the descriptions of the above embodiments, the control lines and the information lines are understood to be necessary for the descriptions of the embodiments. However, the control lines and the information lines do not necessarily indicate all the control lines and the information lines related to the product. In practice, almost all the configurations may be considered to be interconnected.

### Reference Signs List

- 101: update control unit
- 102: path control unit
- 103: update processing unit
- 104: storage region
- 111: first update path
- 112: second update path
- 113: recovery path
- 114: path
- 121: old program
- 122: new program

## Claims

1. A vehicle system, comprising:
a path control unit that performs switching or routing control of data or signals;
an update control unit that is connected to the path control unit via a first update path and that distributes update data including a program or program setting information of the path control unit;
an update processing unit that is connected to the path control unit via a second update path and that, on the basis of the update data, performs update processing of the path control unit; and
a storage region where the program or the program setting information is held through the update processing,
wherein the update control unit is connected to the update processing unit via a recovery path which is different from the first update path.

2. The vehicle system according to claim 1, wherein
in a case where the path control unit is updated, the update control unit distributes the update data to the update processing unit via the first update path, the path control unit, and the second update path, and
in a case where there is an abnormality in the first update path after the update, the update control unit transmits a recovery request of the path control unit to the update processing unit via the recovery path, and the update processing unit that has received the recovery request performs recovery processing to recover the path control unit by using an old program or old program setting information.

3. The vehicle system according to claim 2, wherein
in a case where there is an abnormality in the first update path after the update, the update control unit transmits a diagnosis request to the update processing unit via the recovery path, and the update processing unit that has received the diagnosis request performs a diagnosis step of diagnosing the state of the vehicle system and transmitting the diagnosis result to the update control unit.

4. The vehicle system according to claim 3, wherein
in the diagnosis step, the update processing unit performs any one of normality diagnosis of the path control unit and detection of an abnormality of the power supply voltage, temperature, a peripheral circuit, or a storage region.

5. The vehicle system according to claim 4, wherein
in the normality diagnosis of the path control unit, the update processing unit checks the internal state of the path control unit from a diagnostic path which is different from the second update path.

6. The vehicle system according to claim 3, wherein
the update control unit determines whether or not the recovery processing of the path control unit is feasible on the basis of the diagnosis result of the diagnosis step.

7. The vehicle system according to claim 2, wherein
the old program for performing the recovery processing on the path control unit is either a program operating before the update within the storage region or a program prepared in advance for recovery.

8. The vehicle system according to claim 1, wherein
the path control unit includes any one of an Ethernet switch, a PCIe switch, a MIPI A-PHY, and a CXI, or a combination of at least two thereof.

9. The vehicle system according to claim 1, wherein
the first update path, the second update path, and the recovery path have different communication schemes.

10. The vehicle system according to claim 1, wherein
the storage region is connected to either one of the path control unit and the update processing unit.

11. The vehicle system according to claim 3, wherein
in the diagnosis step, the update control unit transmits a recovery request of the path control unit to the update processing unit via the recovery path when it is diagnosed that communication with the path control unit is possible and there is an abnormality in the first update path or when it is diagnosed that communication with the path control unit is possible and there is an abnormality in the second update path.

12. A method for updating a vehicle system that includes a path control unit that performs switching or routing control of data or signals, an update control unit that is connected to the path control unit via a first update path and that outputs an instruction related to the updating of the path control unit, an update processing unit that is connected to the path control unit via a second update path and that performs processing on the basis of the instruction from the update control unit, and a storage region where the program or the program setting information of the path control unit is held,
the method comprising:
when updating the path control unit, causing the update control unit to distribute update data including a new program or new program setting information of the path control unit to the update processing unit via the first update path, the path control unit, and the second update path;
causing the update processing unit to store the new program or the new program setting information in the storage region to update the program or the program setting information of the path control unit;
in a case where there is an abnormality in the first update path after the update, causing the update control unit to transmit a recovery request of the path control unit to the update processing unit via a recovery path connecting the update control unit and the update processing unit; and
causing the update processing unit that has received the recovery request to perform recovery processing to recover the path control unit by using an old program or old program setting information.
